# EUROPÄISCHE PATENTANMELDUNG

(11) **EP 0 974 439 A2**
(43) Veröffentlichungstag der Anmeldung: **26.01.2000**
(21) Anmeldenummer: 99113886.8
(22) Anmeldetag: 16.07.1999
(51) Int. Cl.: B29C 33/42

(54) **Verfahren zum Bilden eines bienenwabenförmigen Lamellenmusters für ein Laufstreifensegment einer Vulkanisationsform für Fahrzeugluftreifen, Vulkanisationsform und Fahrzeugluftreifen**

(30) Priorität: 22.07.1998 DE 19832931
(71) Anmelder: Continental Aktiengesellschaft, 30165 Hannover (DE)
(72) Erfinder: Mundl, Reinhard, Dr., 30539 Hannover (DE); Rodewald, Helmut, 31249 Hohenhameln (DE)

(57) **Zusammenfassung**

Die Erfindung betrifft ein Verfahren zum Bilden eines bienenwabenförmigen Lamellenmusters für ein Laufstreifensegment einer Vulkanisationsform für Fahrzeugluftreifen unter Verwendung einer ersten Schar (4, 4') von zickzackförmig oder zickzackartig verlaufenden Lamellenzügen mit zumindest im wesentlichen übereinstimmender Erstreckungsrichtung. Die erste Schar von Lamellenzügen (4, 4') wird mit einer zweiten Schar von zickzackförmig oder zickzackartig verlaufenden Lamellenzügen (5) mit ebenfalls zumindest im wesentlichen übereinstimmender Erstreckungsrichtung in kreuzender Anordnung zu ersterer zusammengefügt. Dabei werden Flächen der Waben von Lamellen (4c, 4'c) der einen Lamellenzüge (4, 4') und von Lamellen (5a) der anderen Lamellenzüge (5) gemeinsam gebildet.

Bei der erfindungsgemäßen Vulkanisationsform zur Herstellung von Fahrzeugluftreifen mit den Laufstreifen ausformenden Segmenten, die mit einem wabenförmigen Lamellenmuster aus einer im Segment verankerten ersten Schar (4, 4') von zickzackförmig oder zickzackartig verlaufenden Lamellenzügen mit zumindest im wesentlichen übereinstimmender Erstreckungsrichtung versehen sind, ist im Segment, in kreuzender Anordnung zur Schar der ersten Lamellenzüge (4, 4'), eine zweite Schar von zickzackförmig oder zickzackartig verlaufenden Lamellenzügen (5) mit ebenfalls zumindest im wesentlichen übereinstimmender Erstreckungsrichtung verankert. Dabei bilden Lamellen (4c, 4'c) der einen Lamellenzüge (4, 4') gemeinsam mit Lamellen (5a) der anderen Lamellenzüge (5) Flächen der Waben.

## Beschreibung

Die Erfindung betrifft eine Vulkanisationsform zur Herstellung von Fahrzeugluftreifen mit den Laufstreifen ausformenden Segmenten mit einem - in der Draufsicht von radial innen her - bienenwabenförmigen Lamellenmuster aus einer ersten, im Segment verankerten Schar von zickzackförmig verlaufenden Lamellenzügen mit zumindest im wesentlichen übereinstimmender Erstreckungsrichtung.

Laufstreifenprofile für Winterreifen weisen üblicherweise eine Vielzahl von schmalen Einschnitten auf. Bekanntlich besteht über die Art und Weise der Einschnittanordnung und -ausgestaltung in den einzelnen Profilelementen, beispielsweise den Profilblöcken, eine Möglichkeit der gezielten Beeinflussung der Biegesteifigkeit dieser Profilelemente, insbesondere um die Traktions- und Bremseigenschaften zu optimieren. Eine besonders vorteilhafte Möglichkeit der Beeinflussung der Biegesteifigkeit wird dabei in der EP 0 691 222 A2 vorgeschlagen, die darin besteht, dass die Einschnitte in den einzelnen Profilelementen des Laufstreifenprofiles ein Netz aus regelmäßigen oder im wesentlichen regelmäßigen Sechsecken bilden.

Zur Herstellung derartiger Einschnittstrukturen im Laufstreifen eines Fahrzeugluftreifens müssen die Segmente der Vulkanisationsform, die entsprechende Profilelemente im Laufstreifenprofil ausformen sollen, mit einem bienenwabenförmigen Lamellenmuster versehen werden.

Die DE 196 12 829 A1 offenbart eine gattungsgemäße Vulkanisationsform und schlägt vor, zur Bildung eines bienenwabenförmigen Musters von Lamellen eine Schar von im Segment zu verankernden zickzackförmigen Hauptlamellenzügen vorzusehen, deren Haupterstreckungsrichtung zueinander jeweils parallel ist. Dabei sind je zwei benachbarte Hauptlamellenzüge achsensymmetrisch bezüglich einer Symmetrieachse angeordnet, welche parallel zur Haupterstreckungsrichtung verläuft.

Zur Komplettierung der Wabenstruktur werden weitere, geradlinige Lamellen im Segment verankert, die an die aneinander zugewandten Ecken benachbarter Hauptlamellenzüge anschließen und orthogonal zur Symmetrieachse verlaufen. Diese geradlinigen Nebenlamellen, die jeweils nur eine einzelne Wabenfläche darstellen, können nun entweder ausschließlich im Segment verankert sein oder mit den Ecken der zickzackförmigen Hauptlamellenzüge formschlüssig verbunden werden.

Es hat sich nun herausgestellt, dass bei dieser bekannten Lösung die einzelnen geradlinigen Nebenlamellen Schwachstellen darstellen, die insbesondere dann, wenn sie nur im Segment verankert sind, nicht genügend stabil sind, insbesondere beim Einformvorgang leicht verbogen werden. Die steifere formschlüssige Verbindung der Nebenlamellen mit den Ecken der Hauptlamellenzüge, so wie sie aus der DE 196 12 829 A1 bekannt ist, erfordert ein zeitaufwendiges und umständliches Hantieren, da die Nebenlamellen mit Vorsprüngen in Schlitzen an den Ecken der zickzackförmigen Hauptlamellenzüge gesteckt werden.

Die Erfindung hat die Aufgabe, eine Vulkanisationsform mit Segmenten mit bienenwabenförmigen Lamellenmustern zu schaffen, deren Lamellenmuster aus einer möglichst kleinen Anzahl an Einzelteilen aufgebaut sind und dennoch steif sind. Insbesondere soll die Anzahl der Einzelteile gegenüber der aus DE 196 12 829 A1 bekannten Lösung deutlich reduziert sein.

Diese Aufgabe wird erfindungsgemäß dadurch gelöst, dass im Segment, in kreuzender Anordnung zur ersten Schar von Lamellenzügen, eine zweite Schar von zickzackförmig oder zickzackartig verlaufenden Lamellenzügen mit ebenfalls zumindest im wesentlichen übereinstimmender Erstreckungsrichtung verankert ist, wobei einige Flächen der Waben gemeinsam von Lamellen der einen Schar von Lamellenzüge Lamellen der einen Lamellenzüge gemeinsam mit Lamellen der anderen Lamellenzüge Flächen der Waben bilden.

Das sechseck-wabenförmige Lamellenmuster, ist also erfindungsgemäß von zwei Scharen von Lamellenzügen gebildet. Um dies zu ermöglichen, sind die Lamellenzüge so gestaltet, dass sie gemeinsam einzelne Flächen einer Wabe ausbilden.

Diese Lösung ist frei von einzeln stehenden Lamellenblechen, die bei der vorbekannten Lösung als Verbindungs- oder Nebenlamellen dienen müssen. So entfällt ein kompliziertes zeitaufwendiges Hantieren mit solchen Nebenlamellen. Das erfindungsgemäß gebildete wabenförmige Lamellenmuster ist sehr steif.

Für die zum Ein- und Ausformen des Laufstreifenprofiles erforderliche Stabilität der Lamellenstruktur ist es günstig, wenn jeder Lamellenzug solche Lamellen aufweist, die für sich eine Wabenfläche bilden und die sich mit solchen Lamellen abwechseln, die gemeinsam mit einer Lamelle aus einem Lamellenzug der anderen Schar von Lamellenzügen eine Wabenfläche bilden.

Eine bevorzugte Ausgestaltung sieht dabei vor, dass die Lamellenzüge der einen Schar von Lamellenzügen Basis-Teillamellen aufweisen, die zumindest die Basisteile von Wabenflächen bilden. Bei dieser Ausgestaltung können in besonders einfacher Weise Grundanhebungen in den durch die Basis-Teillamellen gebildeten Einschnitten realisiert werden.

Zur Komplettierung von Wabenflächen besitzen dabei die Lamellenzüge der anderen Schar von Lamellenzügen Brücken-Teillamellen, die auf Basis-Teillamellen sitzen.

Bei einer bezüglich der Stabilität sehr ausgewogenen Ausführungsform der Erfindung wechselt innerhalb eines Lamellenzuges eine Lamelle, die für sich eine Wabenfläche bildet, mit einer Lamelle, die entweder eine Basis-Teillamelle oder eine Brücken-Teillamelle ist, ab.

Um dem beim Ein- und Ausformen eines Laufstreifenprofiles auftretenden Kräften gut standhalten zu können, wird die Vulkanisationsform so ausgestaltet, dass entweder die Basis-Teillamellen oder die Lamellen, die für sich eine Wabenfläche bilden, oder beide mit Verankerungsbereichen zur Verankerung im Formsegment versehen sind.

Eine leicht herstellbare und für die erwähnte Stabilität günstige Ausführungsform sieht vor, dass die Fügestellen zwischen Brücken-Teil- und Basis-Teillamellen zumindest im wesentlichen parallel zur Formsegmentfläche verlaufen.

Bei einer bevorzugten Ausführungsform der Erfindung erfolgt die Ausgestaltung und die Art der Zusammenfügung der sich kreuzenden Lamellenzüge derart, dass zwei Flächen jeder kompletten Wabe von Lamellen der einen Schar von Lamellenzüge und von Lamellen der anderen Schar von Lamellenzüge gebildet werden.

Dabei kann bei einer Ausführungsvariante der Erfindung auch vorgesehen werden, dass Wabenflächen, die von einer Lamelle eines einzigen Lamellenzuges gebildet werden, keine kompletten Wabenflächen sind.

Durch eine entsprechende Ausgestaltung der Lamellenzüge wird, wie bereits erwähnt, die Möglichkeit der Ausbildung von Einschnittbereichen mit angehobenem Grund geschaffen. Für das entstehende Einschnittnetz ist es nun von Vorteil, wenn solche Einschnitte eher in Profilumfangsrichtung orientiert sind. Diesem Umstand kann besonders leicht dadurch Rechnung getragen werden, dass Lamellenzüge, deren Teillamellen zumindest überwiegend Basis-Teillamellen sind, derart im Segment verankert sind, dass ihre Erstreckungsrichtung zumindest im wesentlichen der Umfangsrichtung des zu formenden Reifens entspricht.

Der in einer erfindungsgemäß ausgeführten Vulkanisationsform vulkanisierte Fahrzeugluftreifen ist ebenfalls Gegenstand der vorliegenden Erfindung.

Weitere Merkmale, Vorteile und Einzelheiten der Erfindung werden nun anhand der Ausführungsbeispiele näher beschrieben. Die Figuren sind schematische Darstellungen. Es zeigt
- Fig. 1: eine Draufsicht auf einen Ausschnitt eines das Laufstreifenprofil eines Fahrzeugluftreifens ausformenden Segmentes einer Reifenvulkanisationsform,
- Fig. 2: eine stark vergrößerte Ansicht auf das bienenwabenförmige Lamellenmuster aus Figur 1,
- Fig. 3: eine Schrägansicht eines Teiles des wabenförmigen Lamellenmusters aus Figur 2, wobei hier zwei Ausführungsvarianten der Erfindung dargestellt sind, sowie
- Fig. 4 bis Fig. 6: Ansichten von Ausführungsformen von Lamellenblechstreifen zur Ausbildung des wabenförmigen Lamellenmusters gemäß Fig. 1 bis Fig. 3.

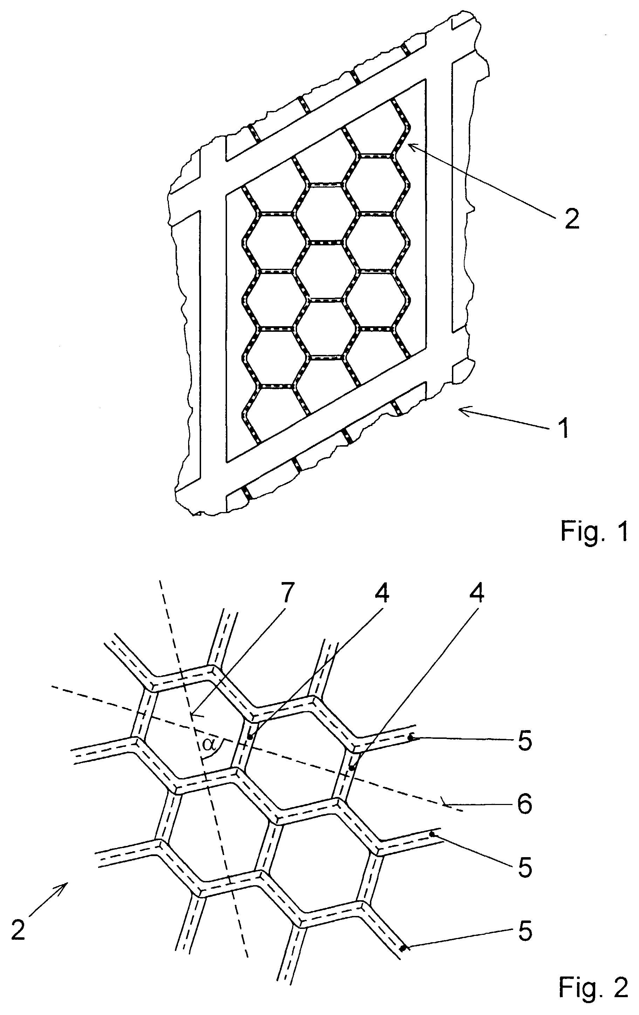

**Figur 1** zeigt eine Draufsicht auf die radial innere Seite eines Segmentes 1 einer Vulkanisationsform, wobei der dargestellte Teil dafür vorgesehen ist, einen Profilblock eines Reifens auszuformen. Zur Ausbildung eines Einschnittnetzes, welches sich aus entlang von Sechsecken verlaufenden Einschnitten zusammensetzt, ist ein bienenwabenförmiges Lamellenmuster 2 vorgesehen. Beim dargestellten Ausführungsbeispiel wird davon ausgegangen, dass sich das zu bildende Einschnittnetz aus regelmäßigen Sechsecken zusammensetzen soll, so dass auch das Lamellenmuster 2 aus regelmäßigen, sechs Ecken aufweisenden Waben besteht. Abweichend davon kann sich das Einschnittnetz auch aus Sechsecken zusammensetzen, die nicht streng regelmäßig gestaltet sind, beispielsweise eine leicht längliche Erstreckung in einer Richtung besitzen. In diesem Fall wäre die Wabenstruktur des Lamellenmusters 2 einer solchen Ausgestaltung entsprechend anzupassen.

Bei dem in Figur 1 dargestellten Ausführungsbeispiel werden durch das Lamellenmuster 2 im entstehenden Profilblock mehrere Reihen von entlang von Sechsecken verlaufenden Einschnitten gebildet.

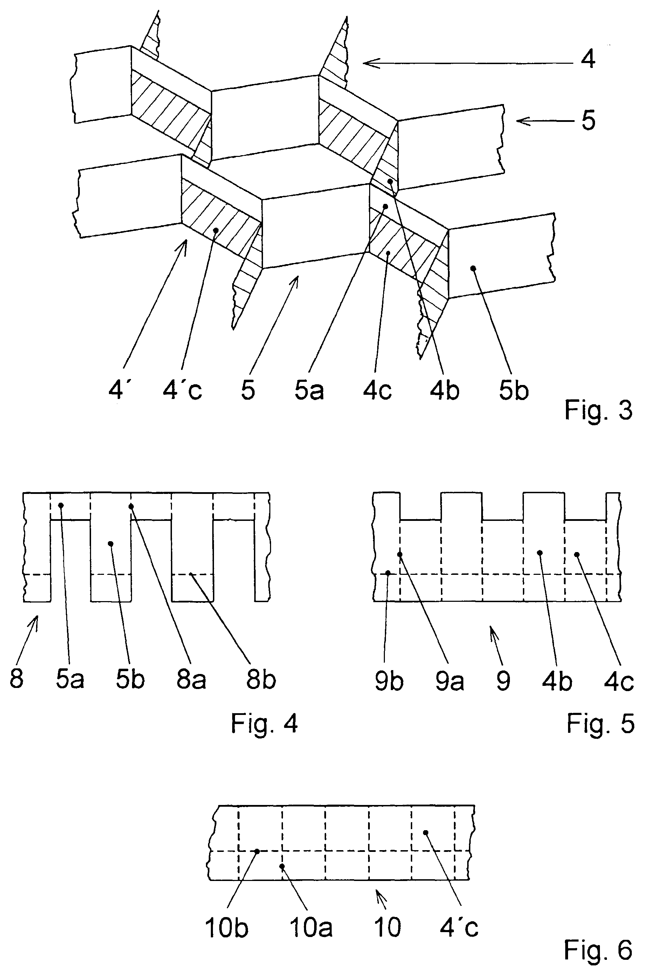

Wie neben der Figur 1 auch die **Figur 2** zeigt, entsteht das bienenwabenförmige Lamellenmuster 2 erfindungsgemäß aus zwei Scharen von Lamellenzügen 4,5. Innerhalb einer Schar von Lamellenzügen 4,5 besitzen diese übereinstimmende Erstreckungsrichtungen. Wie insbesondere aus Figur 2 und **Figur 3** ersichtlich ist, besitzen die Lamellenzüge 4,5 jeweils einen zickzackförmigen Verlauf. Die durch die strichlierte Gerade 7 verdeutlichte Erstreckungsrichtung der Lamellenzüge 4 verläuft unter einem Winkel α von 60 ° bzw. etwa 60 ° zu der durch die strichlierte Gerade 6 verdeutlichte Erstreckungsrichtung der Lamellenzüge 5. Je zwei benachbarte Lamellenzüge 4 bzw. Lamellenzüge 5 sind achsensymmetrisch zueinander verlaufend angeordnet, sodass hier die dargestellten Geraden 6, 7 gleichzeitig die Symmetrieachsen sind.

Wie diese Lamellenzüge 4, 5 zum Ausbilden eines wabenförmigen Lamellenmusters 2 ausgestaltet sein können, wie sie zusammenwirken und wie sie gefertigt werden können, wird nun anhand der Figuren 3 bis 6 näher erläutert.

Figur 3 zeigt eine Schrägansicht auf einen Teil des Lamellenmusters 2 aus Figur 1 und Figur 2, wobei hier nur jene Bereiche der Lamellenzüge 4, 5 dargestellt sind, die von der Segmentoberfläche abragen, es sind demnach hier die Teile, mit welchen die Lamellenzüge 4, 5 im Formsegment verankert sind, nicht eingezeichnet. Zum besseren Verständnis der gegenständlichen Erfindung sind in Fig. 3 die Lamellenzüge einer der beiden Scharen von Lamellenzügen schraffiert worden.

Für die einen Lamellenzüge sind in Fig. 3 zwei Ausführungsformen 4 und 4' eingezeichnet. Die beiden in Fig. 3 eingezeichneten, mit den Lamellenzügen 4, 4' kreuzenden Lamellenzügen 5 stimmen von ihrer Ausgestaltung her überein.

Der dargestellte und wie bereits erwähnt zickzackförmig verlaufende Lamellenzug 4 setzt sich abwechselnd aus Basis-Teillamellen 4c und Komplettlamellen 4b zusammen. Bei den gezeichneten Ausführungsformen entspricht die Höhenerstreckung einer Basis-Teillamelle 4c etwa zwei Drittel der Höhenerstreckung einer Komplettlamelle 4b, deren Höhenerstreckung somit der gewählten Einschnitttiefe entspricht. Je zwei achsensymmetrisch verlaufende Lamellenzüge 4 begrenzen somit, im Bereich der Basis-Teillamellen 4c zum Teil, jeweils vier Seitenflächen von kompletten Sechsecken aus dem Lamellenmuster 2.

Die Lamellenzüge 5 besitzen ebenfalls einen zickzackförmigen Verlauf und setzen sich abwechselnd aus Komplettlamellen 5b und Brücken-Teillamellen 5a zusammen. Die Komplettlamellen 5b sind wie die Komplettlamellen 4b in voller Höhenerstreckung ausgebildet, durch die Brücken-Teillamellen 5a erfolgt die Komplettierung der von den Basis-Teillamellen 4c nur zum Teil gebildeten Wabenseitenflächen. Das wabenförmige Lamellenmuster 2 ergibt sich somit durch ein Aufsetzen der Lamellenzüge 5 auf die Lamellenzüge 4 derart, dass Stirnflächen der Brücken-Teillamellen 5a auf Stirnflächen der Basis-Teillamellen 4c sitzen. Die Ausgestaltung erfolgt insbesondere so, dass die derart entstehenden Fügestellen parallel zur Segmentfläche verlaufen. Dabei können die Fügestellen durch entsprechende Ausgestaltung der Teillamellen 4c, 5a auch beliebig anders gestaltet sein, beispielsweise einen schrägen Verlauf aufweisen.

Bei einer zweiten möglichen Ausführungsform, wo, wie bereits erwähnt, abweichend gestaltete Lamellenzüge 4' vorgesehen sind, sind diese so gestaltet, dass sie sich nur aus Basis-Teillamellen 4'c von verringerter Höhe zusammensetzen. Dabei können sämtliche Basis-Teillamellen 4'c, wie es Fig. 3 zeigt, eine übereinstimmende Höhenerstreckung besitzen, die beim dargestellten Ausführungsbeispiel rund zwei Drittel der Höhenerstreckung der Komplettlamellen 5b entspricht. Im fertigen Reifen entstehen dadurch in den Profilblöcken Einschnittbereiche, die die entsprechenden Begrenzungen der Sechseckstruktur darstellen, aber nur auf etwa zwei Drittel der Tiefe der von den Komplettlamellen 5b gebildeten Einschnittbereiche reichen.

**Figur 4** zeigt eine Frontansicht auf einen Teil eines Lamellenblechstreifens 8 zur Herstellung eines Lamellenzuges 5. Zur Herstellung des Lamellenzuges 5 wird der, wie dargestellt, geprägte Lamellenblechstreifen 8 entlang der in Fig. 4 eingezeichneten, strichlierten Linien 8a mit einem geeigneten Werkzeug gebogen. Die Linie 8b verdeutlicht die Trennungslinie zu jenen Bereichen des Lamellenblechstreifens 8, mit dem dieser in der Vulkanisationsform verankert ist. Diese Verankerungsbereiche sind die Fußbereiche der Komplettlamellen 5b, die durch die Brücken-Teillamellen 5a verbunden sind.

Die **Figuren 5 und 6** zeigen Teile von Lamellenblechstreifen 9 und 10 für die Herstellung eines Lamellenzuges 4 und eines Lamellenzuges 4'. Wie Fig. 5 zeigt, ist der Lamellenblechstreifen 9 so ausgestanzt , dass die abwechselnd aufeinander folgenden Abschnitte die Basis-Teillamellen 4c und die Komplettlamellen 4b bilden, wenn der Lamellenblechstreifen 9 entlang der Linien 9a gebogen wird. Auch hier versinnbildlicht die Linie 9b die Trennung zu jenem Bereich des Lamellenzuges 4, welcher in der Reifenform verankert ist. Dieser Verankerungsbereich kann hier über die Gesamtlänge des Blechstreifens 9 vorliegen.

Fig. 6 zeigt einen Lamellenblechstreifen 10, wie er zur Herstellung eines Lamellenzuges 4' geeignet ist. Zu sehen sind die durch Ausstanzen in übereinstimmender Höhe ausgebildeten Basis-Teillamellen 4'c. Die Linien 10a symbolisieren die Biegekanten zum Entstehen des Zickzackverlaufes des Lamellenzuges 4, die strichlierte Linie 10b die Trennlinie zum Verankerungsbereich.

Wie bereits erwähnt, wird durch eine entsprechende die Ausgestaltung der Lamellenzüge (wie es etwa bei den Lamellenzügen 4' in Fig. 3 gezeigt ist) die Möglichkeit der Ausbildung von Einschnittbereichen mit angehobenem Grund geschaffen. Von Vorteil für das entstehende Einschnittnetz ist es, wenn solche Einschnitte eher in Profilumfangsrichtung orientiert ist, wogegen Einschnitte, die auf volle Tiefe ausgeführt sind, in Profilquerrichtung orientiert sein sollten. Auf solche Ausgestaltungen läßt sich durch eine entsprechende Anordnung der Scharen von Lamellenzügen im Formsegment leicht Rücksicht nehmen. Selbstverständlich können innerhalb eines Lamellenmusters Lamellenzüge unterschiedlicher Ausgestaltung miteinander kombiniert werden, die Ausgestaltung kann auch in einem einzigen Lamellenzug unterschiedlich sein.

Von besonderem Vorteil bei der erfindungsgemäßen Ausbildung eines wabenförmigen Lamelllenmusters zur Ausgestaltung von entlang von Sechsecken verlaufenden Einschnitten in einem Profilelement ist, dass das Muster einerseits durch relativ wenig Teile entsteht und andererseits durch die überlappende und aufeinander gesteckte Anordnung von Lamellenzügen eine sehr hohe Verformungsbeständigkeit besitzt.

Die dargestellten Ausführungsformen zeigen das Grundprinzip der Erfindung. Bei einer Benutzung können entsprechende Anpassungen, beispielsweise betreffend der Tiefe der entstehenden Einschnitte, vorgenommen werden. So kann bei einem erfindungsgemäßen Lamellenmuster durch die Wahl des Niveaus der Trennfugen zwischen den Basis-Teillamellen 4c, 4'c der Lamellenzüge 4, 4' und den Brücken-Teillamellen 5a der Lamellenzüge 5 gezielt die Tragfähigkeit und die Biegesteifigkeit der Gesamtkonstruktion beeinflusst werden. Es besteht eine Vielzahl von Variationen und Möglichkeiten, bei denen die erwähnte hohe Tragfähigkeit und der Verformungswiderstand bestehen bleiben. Neben der dargestellten Ausgestaltung der Lamellenzüge mit zickzackförmigem Verlauf besteht auch die Möglichkeit, eine der beiden Scharen von Lamellenzügen aus, wie beschrieben, zick-zack-förmigen Lamellenzügen zu bilden und die zweite Schar von Lamellenzügen aus zickzackartig, parallel zueinander und jeweils entlang von drei aufeinander folgenden Wabenseiten verlaufenden Lamellenzügen zu bilden, so dass der Kreuzungswinkel der Erstreckungsrichtungen der zwei Scharen von Lamellenzügen 90° bzw. ca. 90° beträgt.

## Patentansprüche

1. Vulkanisationsform zur Herstellung von Fahrzeugluftreifen mit den Laufstreifen ausformenden Segmenten mit einem - in der Draufsicht von radial innen her - bienenwabenförmigen Lamellenmuster aus einer im Segment verankerten ersten Schar von zickzackförmig verlaufenden Lamellenzügen mit zumindest im wesentlichen übereinstimmender Erstreckungsrichtung,
**dadurch gekennzeichnet,**
dass im Segment, in kreuzender Anordnung zur Schar der ersten Lamellenzüge (4, 4'), eine zweite Schar von zickzackförmig oder zickzackartig verlaufenden Lamellenzügen (5) mit ebenfalls zumindest im wesentlichen übereinstimmender Erstreckungsrichtung verankert ist, wobei einige Flächen (5) der Waben gemeinsam von Lamellen (4c, 4'c) der einen Lamellenzüge (4, 4') und mit Lamellen (5a) der anderen Lamellenzüge (5) Flächen der Waben gebildet, sind, wobei innerhalb letztgenannter Flächen (5) Teile (4c) der einen Lamellenzüge als Basisteile und Teile (5a) der anderen Lamellenzüge als Brückenteile radial übereinander angeordnet sind.

2. Vulkanisationsform nach Anspruch 1, dadurch gekennzeichnet, dass jeder Lamellenzug (4, 4', 5) Lamellen (4b, 5b) aufweist, die für sich eine Wabenfläche bilden und die mit Lamellen (4c, 4'c, 5a) abwechseln, die gemeinsam mit einer Lamelle (4c, 4'c, 5a) aus einem Lamellenzug (4, 4', 5) der anderen Schar von Lamellenzügen (4, 4', 5) eine Wabenfläche bilden.

3. Vulkanisationsform nach Anspruch 1 oder 2, dadurch gekennzeichnet, dass die Lamellenzüge (4) der einen Schar von Lamellenzügen Basis-Teillamellen (4c, 4'c) aufweisen, die zumindest die Basisteile von Wabenflächen bilden.

4. Vulkanisationsform nach einem der Ansprüche 1 bis 3, dadurch gekennzeichnet, dass die Lamellenzüge der anderen Schar von Lamellenzügen Brücken-Teillamellen (5a) aufweisen, die auf Basis-Teillamellen (4c, 4'c) sitzen.

5. Vulkanisationsform nach einem der Ansprüche 1 bis 4, dadurch gekennzeichnet, dass innerhalb eines Lamellenzuges (4, 4', 5) eine Lamelle, die für sich eine Wabenfläche bildet, mit einer Lamelle, die entweder eine Basis-Teillamelle (40, 4'c) oder eine Brücken-Teillamelle (5a) ist, abwechselt.

6. Vulkanisationsform nach einem der Ansprüche 1 bis 5, dadurch gekennzeichnet, dass entweder die Basis-Teillamellen (4c, 4'c) oder die Lamellen, die für sich eine Wabenfläche bilden, oder beide mit Verankerungsbereichen zur Verankerung im Formsegment versehen sind.

7. Vulkanisationsform nach einem der Ansprüche 1 bis 6, dadurch gekennzeichnet, dass die Fügestellen zwischen Brücken-Teil- und Basis-Teillamellen (4c, 4'c, 5a) zumindest im wesentlichen parallel zur Formsegmentfläche verlaufen.

8. Vulkanisationsform nach einem der Ansprüche 1 bis 7, dadurch gekennzeichnet, dass zwei Flächen jeder kompletten Wabe von Lamellen (4c, 4'c) der einen Lamellenzüge (4, 4') und vier Flächen von Lamellen (5a) der anderen Lamellenzüge (5) gebildet sind.

9. Vulkanisationsform nach einem der Ansprüche 1 bis 8, dadurch gekennzeichnet, dass Wabenflächen, die allein von einer Lamelle (4'c) eines Lamellenzuges (4') gebildet werden, keine kompletten Wabenflächen sind.

10. Vulkanisationsform nach einem der Ansprüche 1 bis 9, dadurch gekennzeichnet, dass Lamellenzüge (4, 4'), deren Teillamellen zumindest überwiegend Basis-Teillamellen sind, derart im Segment verankert sind, dass ihre Erstreckungsrichtung zumindest im wesentlichen der Umfangsrichtung des zu formenden Reifens entspricht.

11. Fahrzeugluftreifen, welcher in einer Vulkanisierungsform gemäß einem oder mehreren der Ansprüche 1 bis 10 vulkanisiert ist.
